# EUROPÄISCHE PATENTANMELDUNG

(11) **EP 1 857 381 A2**
(43) Veröffentlichungstag der Anmeldung: **21.11.2007**
(21) Anmeldenummer: 07108254.9
(22) Anmeldetag: 15.05.2007
(51) Int. Cl.: B65G 1/06, B65G 1/137

(54) **Lager- und Kommissioniersystem sowie Verfahren zum Kommissionieren**

(30) Priorität: 18.05.2006 DE 102006023477
(71) Anmelder: Dematic GmbH & Co. KG, 63073 Offenbach (DE)
(72) Erfinder: Jungbluth, Volker, 64850, Schaafheim (DE)
(74) Vertreter: Moser & Götze

(57) **Zusammenfassung**

Die Erfindung betrifft ein Lager- und Kommissioniersystem (1) mit mindestens einem Kommissionierplatz (2, 2') zum Kommissionieren von Artikeln (9, 9'), mit mindestens einem zumindest teilweise unterhalb und/oder oberhalb des Kommissionierplatzes (2, 2') angeordneten Lagerbereich (3, 3') für die Artikel und mit einem vertikal ausgerichteten Umlaufförderer (7, 7'), der den Kommissionierplatz (2, 2') mit dem Lagerbereich (3, 3') verbindet, um die Artikel zwischen dem Lagerbereich (3, 3') und dem Kommissionierplatz (2, 2') zu fördern sowie entsprechendes Verfahren.

## Beschreibung

Die Erfindung betrifft ein Lager- und Kommissioniersystem mit mindestens einem Kommissionierplatz zum Kommissionieren von Artikeln, mit mindestens einem zumindest teilweise unterhalb und/oder oberhalb des Kommissionierplatzes angeordneten Lagerbereich für die Artikel sowie ein entsprechendes Verfahren zum Kommissionieren.

Kommissionieren ist das Sammeln von Artikeln aus einem Lagersortiment und deren Zusammenstellung zu einem Auftrag. Man kennt das Kommissionieren von absatzorientierten Kundenaufträgen und auch innerbetrieblichen Aufträgen.

Man unterscheidet beim Kommissionieren aufgrund der Organisation zwischen einzonigem und mehrzonigem Kommissionieren. Beim einzonigem Kommissionieren sammelt jeder Kommissionierer alle Artikel aus dem gesamten Lagerbereich, wohingegen beim mehrzonigen Kommissionieren jedem Kommissionierer lediglich ein bestimmter Lagerbereich zugeordnet ist, er also nur für eine Auswahl von Artikeln zuständig ist.

Ferner unterscheidet man beim Kommissionieren aufgrund der gewählten Strategie zwischen auftrags- und artikelbezogenem Kommissionieren, wobei das Sammeln der Artikel selbst entweder seriell, also nacheinander, oder parallel, also gleichzeitig, stattfinden kann.

Beim auftragsbezogenen Kommissionieren wird ein Auftrag als Ganzes von jedem Kommissionierer abgearbeitet, d. h. alle Artikel des Auftrags zusammengestellt. Beim artikelbezogenen Kommissionieren wird dagegen jeder Auftrag von mehreren Kommissionieren bearbeitet, die jeweils nur einen Teil der Artikel zusammenstellen.

Beim Kommissionieren können Kommissionierer einerseits die Artikel aus dem Lager zusammensuchen, wobei sie die statisch im Lager gelagerten Artikel heraussuchen. Man spricht hierbei vom "Mann zur Ware" Prinzip, da der Kommissionierer die Artikel "zu Fuß" zusammenstellt. Beim Kommissionieren können andererseits aber auch die Artikel aus dem Lager zum Kommissionierer gebracht werden. Man spricht hierbei vom "Ware zum Mann" Prinzip. Hierbei werden bevorzugt Systeme mit dynamischer Artikelbereitstellung eingesetzt, in denen der Kommissionierer einen ortsfesten Kommissionierplatz besetzt und dort mit Artikeln versorgt wird.

Aufgabe der Erfindung ist es ein weiteres Lager- und Kommissioniersystem sowie ein Verfahren zum Kommissionieren zur Verfügung zu stellen, die insbesondere beim mehrzonigen, artikelbezogenen Kommissionieren nach dem "Ware zum Mann" Prinzip Verwendung finden, die eine gute Raumausnutzung und den Einsatz einfacher technischer Maßnahmen ermöglichen trotz hohem Durchsatz beim Kommissionieren.

Diese Aufgabe wird durch das in Anspruch 1 angegebene Lagerund Kommissioniersystem sowie das in Anspruch 16 angegebene Verfahren gelöst.

Dadurch, dass das Lager- und Kommissioniersystem mit mindestens einem Kommissionierplatz zum Kommissionieren von Artikeln, mit mindestens einem zumindest teilweise unterhalb und/oder oberhalb des Kommissionierplatzes angeordneten Lagerbereich für die Artikel und mit einem vertikal ausgerichteten Umlaufförderer versehen ist, der den Kommissionierplatz mit dem Lagerbereich verbindet, um die Artikel zwischen dem Lagerbereich und dem Kommissionierplatz zu fördern, kann das System besonders raumeffizient ausgestaltet werden. Insbesondere eignet es sich zum Einsatz beim mehrzonigen, artikelbezogenen Kommissionieren nach dem "Ware zum Mann" Prinzip, da hierbei jeder Kommissionierplatz nur mit einer bestimmten kleineren Auswahl an Artikeln aus dem Gesamtsortiment versorgt werden muss.

Unter vertikal ausgerichteten Umlaufförderer wird insbesondere ein Vertikalumlaufförderer verstanden.

Wenn der Umlaufförderer einen aufwärts laufenden Strang und einen abwärts laufenden Strang aufweist und mit einem der Stränge einen Kommissionierplatz versorgt und mit einem der Stränge einen Kommissionierplatz entsorgt, werden beide Stränge des jeweiligen Umlaufförderers aktiv genutzt. Es wird quasi im Gegenstrom gearbeitet.

In einer bevorzugten Ausführungsform sind zwei Kommissionierplätze, zwei Umlaufförderer und zwei Lagerbereiche vorgesehen und derart ausgestaltet, dass jeweils ein Kommissionierplatz von einem der Umlaufförderer mit Artikeln versorgt und über den jeweils anderen Umlaufförderer der Kommissionierplatz von Artikeln entsorgt wird. Dies erhöht den Kommissionierdurchsatz und erlaubt gleichzeitig eine größere Auswahl von Artikeln pro Kommissionierplatz, ohne dass die technische Ausgestaltung wesentlich verkompliziert wird. Denn pro Kommissionierplatz sind wiederum nur ein Umlaufförderer und ein horizontal Förderer usw. vorgesehen. Sie sind im Wesentlichen lediglich anders zueinander angeordnet.

Alternativ sind nur ein Kommissionierplatz, ein Umlaufförderer und ein Lagerbereich vorgesehen und derart ausgestaltet, dass der Kommissionierplatz jeweils von einem der Stränge des Umlaufförderers mit Artikeln versorgt und über den jeweils anderen Strang von Artikeln entsorgt wird.

Günstig ist es, wenn der Lagerbereich vollständig unterhalb oder oberhalb des mindestens einen Kommissionierplatzes angeordnet ist. Diese Anordnung erlaubt eine besonders günstige Ausnutzung des vorhandenen Raums.

Bevorzugt ist es, wenn mindestens eine Übergabevorrichtung angrenzend an den Umlaufförderer zur Übergabe der Artikel von dem Lagerbereich an den Umlaufförderer vorgesehen ist. Dabei ist es sinnvoll, wenn an die aufwärts und abwärts laufenden Stränge angrenzend Pufferplätze angeordnet und diese mit dem Langerbereich verbunden sind, in denen die Artikel zur Ausoder Rücklagerung in den Lagerbereich oder Übergabe oder Übernahme von dem Umlaufförderer mittels der Übergabevorrichtung zwischenspeicherbar sind. Auch können die Lagerbereiche über einen Verbindungsförderer mit den Pufferplätzen verbunden sein.

Eine einfache Ausgestaltung wird erreicht, wenn die Pufferplätze als Teil des Lagerbereichs ausgebildet sind.

Besonders bevorzugt ist es, wenn der Lagerbereich in zwei Lagerteilbereiche für die Artikel aufgeteilt ist, die einen Verfahrweg begrenzen und über den Verbindungsförderer mit einander verbunden sind, wie z.B. zwei beabstandete Regalzeilen.

In einer besonders bevorzugten Ausgestaltung weisen die Lagerbereiche mehrere Regalebenen auf, wobei pro Regalebene jeweils der Verbindungsförderer als ein Einebenenregalbediengerät für den Transport der Artikel zwischen den Lagerbereichen und den Pufferplätzen ausgebildet ist.

Das Einebenenregalbediengerät, z. B. ein so genanntes Shuttle ist somit schnell wieder für andere Vorgänge frei und muss nicht auf eine Lücke auf/in dem Umlaufförderer warten, um die Artikel zu übergeben, da es durch die Pufferplätze bedingt frei wird. Alternative könnte dies auch durch eine entsprechende Ausgestaltung des Regalbediengeräts selbst, z. B. mit mehreren Plätzen erreicht werden.

Wenn zum Fördern der Artikel zwischen dem Umlaufförderer und dem Kommissionierplatz ein horizontaler Förderer vorgesehen ist, können die zu kommissionierenden Artikel in ergonomischer Weise dem Kommissionierer zugeführt werden und die Geschwindigkeit des Umlaufförderers von derjenigen des Kommissionierens entkoppelt werden.

Sinnvoll ist es, wenn der jeweilige horizontale Förderer einen Bogen zwischen den zwei Strängen eines Umlaufförderers ausbildet. Dies erlaubt auf einfache Weise eine Zu- und Abfuhr der Artikel.

Ferner ist es günstig, wenn Übergabevorrichtungen zur Übergabe der Artikel von dem Umlaufförderer an den horizontalen Förderer und in umgekehrter Richtung vorgesehen sind.

Bevorzugt ist es, wenn der Lagerbereich jeweils zur Lagerung der an einem einzigen Kommissionierplatz zu kommissionierenden Artikel dient. Das Gesamtlager besteht also aus mehreren Lagerbereichen, in denen jeweils nur eine kleinere Auswahl von Artikeln, die an dem jeweiligen Kommissionierplatz zusammenzustellen sind, gelagert werden.

Außerdem betrifft die vorliegende Erfindung ein entsprechendes Verfahren zum Kommissionieren nach Anspruch 16, das ggf. unter Verwendung des oben beschriebenen Systems durchführbar ist.

Weitere Merkmale des Verfahrens ergeben sich aus den Unteransprüchen 17 bis 32.

Einzelheiten und Vorteile der Erfindung werden in der nachfolgenden Beschreibung eines Ausführungsbeispieles anhand der Zeichnung erläutert. Es zeigen:

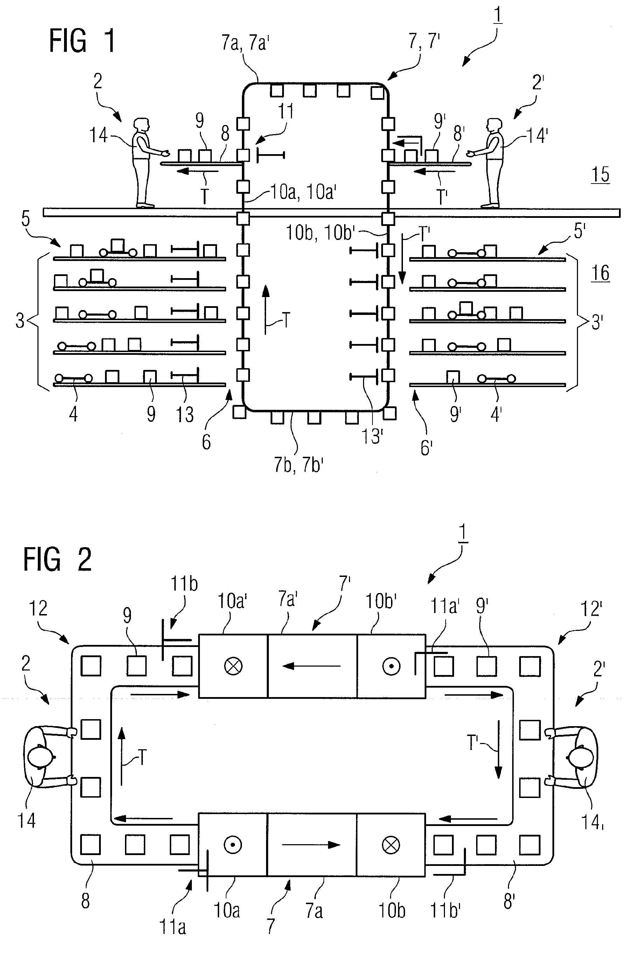

Fig. 1 eine schematische Seitenansicht eines Lager- und Kommissioniersystems mit zwei Kommissionierplätzen und
Fig. 2 eine Draufsicht auf die Kommissionierebene des Systems aus Fig. 1 sowie

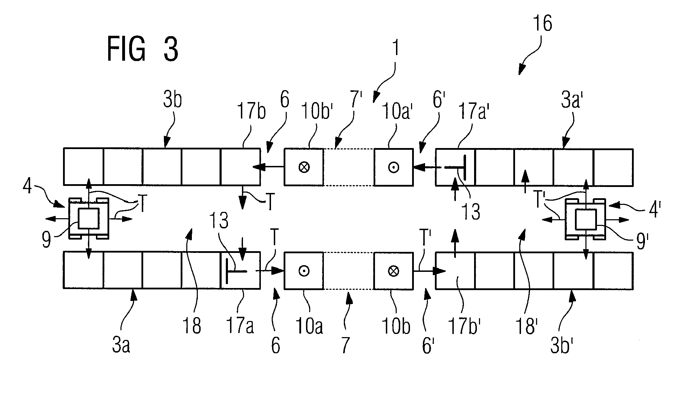

Fig. 3 eine Draufsicht auf einen Querschnitt durch die Lagerebene des Systems aus Fig. 1.

In den Figuren ist ein als Ganzes mit 1 bezeichnetes Lagerund Kommissioniersystem dargestellt, das zwei Kommissionierplätze 2, 2', zwei Lagerbereiche 3, 3' und zwei vertikal umlaufende Umlaufförderer 7, 7' umfasst.

Die Kommissionierplätze 2, 2' befinden sich in einer Ebene 15 oberhalb des Gesamtlagers, das in zwei Lagerbereiche 3, 3' aufgeteilt ist. Die Lagerbereiche 3, 3' umfassen jeweils zwei Lagerteilbereiche, die als nebeneinander und parallel zu einander angeordnete Regalzeilen 3a, 3b; 3a', 3b' mit mehreren Regalebenen 5, 5' ausgebildet sind, in den jeweils die Artikel 9, 9' für den jeweiligen Kommissionierplatz 2, 2' lagern.

Zwischen den Lagerbereichen 3 und 3' sind jeweils zwei Umlaufförderer 7, 7' angeordnet, die ebenfalls nebeneinander und parallel zueinander verlaufen. Der Abstand der einzelnen aufwärts und abwärts laufenden Stränge (siehe unten) ist entsprechend dem Umlenkradius der Umlaufförderer 7, 7' gewählt, der auch den Abstand der Regalzeilen 3a, 3b; 3a', 3b' vorgibt.

Die Umlaufförderer 7, 7' weisen jeweils einen aufwärts laufenden Strang 10a, 10a' und einen abwärts laufenden Strang 10b, 10b' auf.

Dabei läuft ein Strang 10a, 10a' des Umlaufförderers 7, 7' vom jeweiligen Kommissionierplatz 2, 2' aus gesehen von unten nach oben und der jeweils andere Strang 10b, 10b' des Umlaufförderers 7, 7' von oben nach unten.

Mit dem aufwärts laufenden Strang 10a, 10a' wird jeweils ein Kommissionierplatz 2, 2' mit Artikeln 9, 9' aus dem Lagerteilbereich 3a, 3a' versorgt und mit dem nach unten laufenden Strang 10b, 10b' jeweils der andere Kommissionierplatz 2, 2' entsorgt und die Artikel in den Lagerteilbereich 3b, 3b' zurückgelagert.

Der Umlaufförderer 7, 7' ist dabei jeweils über einen horizontalen Förderer 8, 8' mit dem jeweiligen Kommissionierplatz 2, 2' verbunden. Die horizontalen Förderer 8, 8' bilden dabei jeweils einen Bogen 12, 12' aus, die den nach unten laufenden Strang 10b, 10b' des einen Umlaufförderers 7, 7' mit dem nach oben laufenden Strang 10a, 10a' des jeweils anderen Umlaufförderers 7, 7' verbindet.

Die Transportrichtung der Artikel 9, 9' ist in den Figuren jeweils durch Pfeile T, T' angedeutet.

Die Artikel 9, 9' sind pro Kommissionierplatz 2, 2' jeweils in zwei Regalzeilen 3a, 3b; 3a', 3b' gelagert. Die Regalzeilen 3a und 3b bzw. 3a' und 3b' sind derart beabstandet, dass ein Einebenenregalbediengerät 4, 4', wie einem auf Schienen laufenden Shuttle, zwischen diesen in dem so gebildeten Verfahrweg bewegt werden kann.

Jede Regalzeile 3a, 3b; 3a', 3b' ist über ein Einebenenregalbediengerät 4, 4', wie einem auf Schienen laufenden Shuttle, zur Entnahme und Transport sowie ggf. zur Versorgung der jeweiligen Regalfächer mit Artikeln 9, 9' versehen.

Jedes Shuttle 4, 4' dient also zur Entnahme/Einlagerung von Artikeln 9, 9' aus/in den entsprechenden Regalebenen 5, 5' der nebeneinander und parallel zu einander stehenden Regalzeilen 3a, 3b; 3a', 3b'.

Die entnommenen Artikel 9, 9' werden von dem Shuttle 4, 4' in Längsrichtung der jeweiligen Regalebene 5, 5' zum Umlaufförderer 7, 7' hin transportiert.

Dort angekommen werden sie vom Shuttle 4, 4' an eine Übergabevorrichtung 6, 6' übergeben. Das Shuttle 4, 4' ist somit schnell für den nächsten Vorgang frei.

Die Übergabevorrichtung 6, 6' puffert die Artikel 9, 9' solange auf einem Pufferplatz 17a, 17a' zwischen, bis im Umlaufförderer 7,7' eine geeignete Lücke vorhanden ist.

Sinnvollerweise werden die Pufferplätze 17, 17' von dem jeweils letzten Regalfach einer Regalebene zum Umlaufförderer 7, 7' hin ausgebildet.

Dann werden die Artikel 9, 9' an den Umlaufförderer 7,7' übergeben, z. B. durch einen Pusher 13, 13'. Die Übergabe erfolgt an den jeweils nach oben laufenden Strang 10a, 10a', sodass der Artikel 9, 9' möglichst schnell zur Kommissionierebene 15 oberhalb der Lagerebene 16 gefördert wird.

Auf Höhe des jeweiligen Kommissionierplatzes 2, 2' entnimmt wiederum eine geeignete Übergabevorrichtung 11, 11', z. B. ein Pusher, die Artikel 9,9' aus dem Umlaufförderer 7,7'. Der Umlaufförderer 7,7' läuft ab hier, also im letzten Abschnitt des aufwärts laufenden Strangs 10a, 10a' und in seinem jeweiligen Obertrum 7a, 7a' sowie dem ersten Abschnitt des abwärts laufenden Strangs 10b, 10b' leer um.

Die von der Übergabevorrichtung 11a, 11a' entnommenen Artikel 9,9' gelangen nun auf den jeweiligen horizontalen Förderer 8, 8', der z. B. ein Rollen- oder Bandförderer ist. An diesem ist der jeweilige Kommissionierplatz 2 bzw. 2' angeordnet, an dem der Kommissionierer 14, 14' seine Arbeit verrichtet und die Zusammenstellung der Artikel 9, 9' vornimmt.

Nicht verwendete Artikel 9, 9' oder z. B. deren Sammelbehälter laufen an dem Kommissionierer 14 bzw. seinem Kommissionierplatz 2, 2' in der Schleife 12, 12 des jeweiligen horizontalen Förderers 8, 8' vorbei und werden am Ende des Förderers 8, 8' wiederum durch eine entsprechende Übergabevorrichtung 11b, 11b' vom Förderer 8,8' an den nach unten laufenden Strang 10b, 10b' des jeweiligen Umlaufförderers 7,7' übergegeben. Dieser transportiert so die nicht benötigten Artikel 9, 9' von der Kommissionierebene 15 zurück in den Lagerbereich 3, 3' der Lagerebene 16, wo sich der oben beschriebene Vorgang in umgekehrter Reihenfolge zur Einlagerung der Artikel 9, 9' abspielt.

Auf Höhe der jeweiligen Regalebene 5, 5' entnimmt wiederum eine geeignete Übergabevorrichtung 6, 6' die Artikel 9,9' aus dem Umlaufförderer 7,7' und lagert diese auf den entsprechenden Pufferplätzen 17b, 17b'.

Der Umlaufförderer 7,7' läuft ab hier, also im letzten Abschnitt des abwärts laufenden Strangs 10b, 10b' und in seinem jeweiligen Untertrum 7b, 7b' sowie dem ersten Abschnitt des aufwärts laufenden Strangs 10ba, 10a' leer um.

Die Artikel 9, 9' werden dann vom Shuttle 4, 4' der jeweiligen Regalebene 5, 5' übernommen, das diese zu ihrem entsprechenden Regalfach transportiert und dort einlagert.

Es versteht sich, dass es auch möglich ist, den jeweiligen Obertrum 7a, 7a' bzw. Untertrum 7b, 7b' nicht leer umlaufen zulassen und so auf einfache Weise einen Austausch der Artikel zwischen den Lagerbereichen 3 und 3' zu erreichen.

Selbstverständlich ist es auch möglich lediglich ein Kommissionierplatz 2 einen Umlaufförderer 7 und einen Lagerbereich 3 mit zwei Regalzeilen 3a, 3b zu verwenden. Dann erfolgt die Ver- und Entsorgung der Artikel 9 über einen einzigen Umlaufförderer 7 mit seinem jeweils nach oben laufenden Strang 10a und seinem nach unten laufenden Strang 10b.

### Bezugszeichenliste

- 1: Lager- und Kommissioniersystem
- 2: Kommissionierplatz
- 3: Lagerbereich
- 3a: Regalzeile
- 3b: Regalzeile
- 4: Einebenenregalbediengerät, Shuttle
- 5: Regalebene
- 6: Übergabevorrichtung
- 7: Umlaufförderer
- 7a: Obertrum
- 7b: Untertrum
- 8: horizontaler Förderer
- 9: Artikel
- 10a: aufwärts laufender Strang
- 10b: abwärts laufender Strang
- 11: Übergabevorrichtung
- 12: Bogen
- 13: Pusher
- 14: Kommissionierer
- 15: Kommissionierebene
- 16: Lagerebene
- 17: Pufferplatz
- 18: Verfahrweg

- T: Transportrichtung der Artikel

## Patentansprüche

1. Lager- und Kommissioniersystem (1) mit mindestens einem Kommissionierplatz (2, 2') zum Kommissionieren von Artikeln (9, 9'), mit mindestens einem zumindest teilweise unterhalb und/oder oberhalb des Kommissionierplatzes (2, 2') angeordneten Lagerbereich (3, 3') für die Artikel und mit einem vertikal ausgerichteten Umlaufförderer (7, 7'), der den Kommissionierplatz (2, 2') mit dem Lagerbereich (3, 3') verbindet, um die Artikel zwischen dem Lagerbereich (3, 3') und dem Kommissionierplatz (2, 2') zu fördern.

2. Lager- und Kommissioniersystem (1) nach Anspruch 1, **dadurch gekennzeichnet, dass** der Umlaufförderer (7, 7') einen aufwärts laufenden Strang (10a, 10a') und einen abwärts laufenden Strang (10b, 10b') aufweist und mit einem der Stränge (10a, 10b; 10a', 10b') einen Kommissionierplatz (2, 2') versorgt und mit einem der Stränge (10a, 10b; 10a', 10b') einen Kommissionierplatz (2, 2') entsorgt.

3. Lager- und Kommissioniersystem (1) Anspruch 1 oder 2, **dadurch gekennzeichnet, dass** zwei Kommissionierplätze (2, 2'), zwei Umlaufförderer (7, 7') und zwei Lagerbereiche (3, 3') vorgesehen und derart ausgestaltet sind, dass jeweils ein Kommissionierplatz (2, 2') von einem der Umlaufförderer (7, 7') mit Artikeln versorgt und über den jeweils anderen Umlaufförderer (7, 7') der Kommissionierplatz (2', 2) von Artikeln entsorgt wird.

4. Lager- und Kommissioniersystem (1) Anspruch 2, **dadurch gekennzeichnet, dass** ein Kommissionierplatz (2, 2'), ein Umlaufförderer (7, 7') und ein Lagerbereich (3, 3') vorgesehen und derart ausgestaltet sind, dass der Kommissionierplatz (2, 2') jeweils von einem der Stränge (10a, 10b; 10a', 10b') des Umlaufförderers (7, 7') mit Artikeln versorgt und über den jeweils anderen Strang (10a, 10b; 10a', 10b') von Artikeln entsorgt wird.

5. Lager- und Kommissioniersystem (1) nach einem der vorhergehenden Ansprüche, **dadurch gekennzeichnet, dass** der Lagerbereich (3, 3') vollständig unterhalb oder oberhalb des mindestens eine Kommissionierplatzes (2, 2') angeordnet ist.

6. Lager- und Kommissioniersystem (1) nach einem der vorhergehenden Ansprüche, **dadurch gekennzeichnet, dass** mindestens eine Übergabevorrichtung (6, 6') angrenzend an den Umlaufförderer (7, 7') zur Übergabe der Artikel von dem Lagerbereich (3, 3') an den Umlaufförderer (7, 7') vorgesehen ist.

7. Lager- und Kommissioniersystem (1) nach Anspruch 6, **dadurch gekennzeichnet, dass** an die aufwärts und abwärts laufenden Stränge ((10a, 10b; 10a', 10b') angrenzend Pufferplätze (17, 17') angeordnet und diese mit dem Langerbereich (3, 3') verbunden sind, in denen die Artikel (9, 9') zur Aus- oder Rücklagerung in den Lagerbereich (3, 3') oder Übergabe oder Übernahme von dem Umlaufförderer (7, 7') mittels der Übergabevorrichtung (6, 6') zwischenspeicherbar sind.

8. Lager- und Kommissioniersystem (1) nach Anspruch 7 oder 8, **dadurch gekennzeichnet, dass** die Lagerbereiche (3, 3') über einen Verbindungsförderer (4, 4') mit den Pufferplätzen (17, 17') verbunden sind.

9. Lager- und Kommissioniersystem (1) nach Anspruch 3, **dadurch gekennzeichnet, dass** die Pufferplätze (17, 17') als Teil des Lagerbereichs (3, 3') ausgebildet sind.

10. Lager- und Kommissioniersystem (1) nach Anspruch 8 oder 9, **dadurch gekennzeichnet, dass** der Lagerbereich (3, 3') in zwei Lagerteilbereiche (3a, 3b; 3a', 3b') für die Artikel (9, 9') aufgeteilt ist, die einen Verfahrweg (18, 18') begrenzen und über den Verbindungsförderer (4, 4') mit einander verbunden sind.

11. Lager- und Kommissioniersystem (1) nach einem der Ansprüche 1 bis 10, **dadurch gekennzeichnet, dass** die Lagerbereiche (3, 3') mehrere Regalebenen (5, 5') aufweisen, wobei pro Regalebene (5, 5') jeweils der Verbindungsförderer (4, 4') als ein Einebenenregalbediengerät (4, 4') für den Transport der Artikel (9, 9') zwischen den Lagerbereichen (3, 3') und den Pufferplätzen (17, 17') ausgebildet ist.

12. Lager- und Kommissioniersystem (1) nach einem der vorhergehenden Ansprüche, **dadurch gekennzeichnet, dass** zum Fördern der Artikel zwischen dem Umlaufförderer (7, 7') und dem Kommissionierplatz (2, 2') ein horizontaler Förderer (8, 8') vorgesehen ist.

13. Lager- und Kommissioniersystem (1) nach Anspruch 12, **dadurch gekennzeichnet, dass** der jeweilige horizontale Förderer (8, 8') einen Bogen (12, 12') zwischen den zwei Strängen (10a, 10b; 10a', 10b') eines Umlaufförderers (7, 7') ausbildet.

14. Lager- und Kommissioniersystem (1) nach Anspruch 12 oder 13, **dadurch gekennzeichnet, dass** Übergabevorrichtungen (11a, 11b; 11a', 11b') zur Übergabe der Artikel von dem Umlaufförderer (7, 7') an den horizontalen Förderer (8, 8') und in umgekehrter Richtung vorgesehen sind.

15. Lager- und Kommissioniersystem (1) nach einem der vorhergehenden Ansprüche, **dadurch gekennzeichnet, dass** der Lagerbereich (3; 3') jeweils zur Lagerung der an einem einzigen Kommissionierplatz (2; 2') zu kommissionierenden Artikel (9, 9') dient.

16. Verfahren zum Kommissionieren von Artikeln in einem Lagerund Kommissioniersystem (1) mit mindestens einem Kommissionierplatz (2, 2') zum Kommissionieren von Artikeln (9, 9')und mit mindestens einem zumindest teilweise unterhalb und/oder oberhalb des Kommissionierplatzes (2, 2') angeordneten Lagerbereich (3, 3') für die Artikel, wobei die Artikel vertikal umlaufend zwischen dem Lagerbereich (3) und dem Kommissionierplatz (2) gefördert werden.

17. Verfahren nach Anspruch 16, **dadurch gekennzeichnet, dass** die zu kommissionierenden Artikel mittels eines vertikal ausgerichteten Umlaufförderers (7, 7') gefördert werden, der den Kommissionierplatz (2, 2') mit dem Lagerbereich (3, 3') verbindet, um die Artikel zwischen dem Lagerbereich (3, 3') und dem Kommissionierplatz (2, 2') zu fördern.

18. Verfahren nach Anspruch 17, **dadurch gekennzeichnet, dass** der Umlaufförderer (7, 7') einen aufwärts laufenden Strang (10a, 10a') und einen abwärts laufenden Strang (10b, 10b') aufweist und mit einem der Stränge (10a, 10b; 10a', 10b') einen Kommissionierplatz (2, 2') versorgt und mit einem der Stränge (10a, 10b; 10a', 10b') einen Kommissionierplatz (2, 2') entsorgt.

19. Verfahren nach Anspruch 18, **dadurch gekennzeichnet, dass** der Umlaufförderer (7, 7') mit seinem aufwärts laufenden Strang (10a, 10a') jeweils einen Kommissionierplatz (2, 2') mit Artikeln (9, 9') versorgt und mit seinem abwärts laufenden Strang (10b, 10b') jeweils einen anderen Kommissionierplatz (2, 2') von Artikeln (9, 9') entsorgt.

20. Verfahren nach einem der Ansprüche 16 bis 19, **dadurch gekennzeichnet, dass** zwei Kommissionierplätze (2, 2'), zwei Umlaufförderer (7, 7') und zwei Lagerbereiche (3, 3') vorgesehen und derart ausgestaltet sind, dass jeweils ein Kommissionierplatz (2, 2') von einem der Umlaufförderer (7, 7') mit Artikeln versorgt und über den jeweils anderen Umlaufförderer (7, 7') der Kommissionierplatz (2', 2) von Artikeln entsorgt wird.

21. Verfahren nach einem der Ansprüche 16 bis 19, **dadurch gekennzeichnet, dass** ein Kommissionierplatz (2, 2'), ein Umlaufförderer (7, 7') und ein Lagerbereich (3, 3') vorgesehen und derart ausgestaltet sind, dass der Kommissionierplatz (2, 2') jeweils von einem der Stränge (10a, 10b; 10a', 10b') des Umlaufförderers (7, 7') mit Artikeln versorgt und über den jeweils anderen Strang (10a, 10b; 10a', 10b') von Artikeln entsorgt wird.

22. Verfahren nach einem der vorhergehenden Ansprüche 16 bis 21, **dadurch gekennzeichnet, dass** der Lagerbereich (3, 3') vollständig unterhalb oder oberhalb des mindestens eine Kommissionierplatzes (2, 2') angeordnet ist.

23. Verfahren nach einem der vorhergehenden Ansprüche 16 bis 22, **dadurch gekennzeichnet, dass** die Artikel (9, 9') mittels mindestens einer an den Umlaufförderer (7, 7') angrenzenden Übergabevorrichtung (6, 6') von dem Lagerbereich (3, 3') an den Umlaufförderer (7, 7') übergeben werden.

24. Verfahren nach Anspruch 23, **dadurch gekennzeichnet, dass** die Artikel (9, 9') zur Aus- oder Rücklagerung in den Lagerbereich (3, 3') oder Übergabe oder Übernahme von dem Umlaufförderer (7, 7') mittels der Übergabevorrichtung (6, 6') in an die aufwärts und abwärts laufenden Stränge ((10a, 10b; 10a', 10b') angrenzenden Pufferplätzen (17, 17'), die mit dem Lagerbereich (3, 3') verbunden sind, zwischengelagert werden.

25. Verfahren nach Anspruch 23 oder 24, **dadurch gekennzeichnet, dass** die Lagerbereiche (3, 3') über einen Verbindungsförderer (4, 4') mit den Pufferplätzen (17, 17') verbunden sind.

26. Verfahren nach Anspruch 25, **dadurch gekennzeichnet, dass** die Pufferplätze (17, 17') im Lagerbereich (3, 3') ausgebildet werden.

27. Verfahren nach Anspruch 25 oder 26, **dadurch gekennzeichnet, dass** der Lagerbereich (3, 3') in zwei Lagerteilbereiche (3a, 3b; 3a', 3b') für die Artikel (9, 9') aufgeteilt werden, die einen Verfahrweg (18, 18') begrenzen und über den Verbindungsförderer (4, 4') mit einander verbunden werden.

28. Verfahren nach einem der Ansprüche 16 bis 27, **dadurch gekennzeichnet, dass** die Lagerbereiche (3, 3') mehrere Regalebenen (5, 5') aufweisen, wobei pro Regalebene (5, 5') jeweils der Verbindungsförderer (4, 4') als ein Einebenenregalbediengerät (4, 4') für den Transport der Artikel (9, 9') zwischen den Lagerbereichen (3, 3') und den Pufferplätzen (17, 17') ausgebildet ist.

29. Verfahren nach einem der Ansprüche 16 bis 28, **dadurch gekennzeichnet, dass** die Artikel zwischen dem Umlaufförderer (7, 7') und dem Kommissionierplatz (2, 2') mittels eines Förderers (8, 8') horizontal gefördert werden.

30. Verfahren nach Anspruch 29, **dadurch gekennzeichnet, dass** der die Artikel (9, 9') im Bogen (12, 12') zwischen den zwei Strängen (10a, 10b; 10a', 10b') eines Umlaufförderers (7, 7') gefördert werden.

31. Verfahren nach Anspruch 29 oder 30, **dadurch gekennzeichnet, dass** die Artikel von dem Umlaufförderer (7, 7') an den horizontalen Förderer (8, 8') und in umgekehrter Richtung mittels Übergabevorrichtungen (11a, 11b; 11a', 11b') übergeben werden.

32. Verfahren nach einem der vorhergehenden Ansprüche 16 bis 31, **dadurch gekennzeichnet, dass** der Lagerbereich (3; 3') jeweils zur Lagerung der an einem einzigen Kommissionierplatz (2; 2') zu kommissionierenden Artikel (9, 9') dient.
